# DEMANDE DE BREVET EUROPEEN

(11) **EP 1 124 066 A1**
(43) Date de publication de la demande: **16.08.2001**
(21) Numéro de dépôt: 01400332.1
(22) Date de dépôt: 09.02.2001
(51) Int. Cl.: F16C 3/20, F16C 3/06

(54) **Vilebrequin pour moteur à combustion interne**

(30) Priorité: 11.02.2000 FR 0001708
(71) Demandeur: Renault, 92100 Boulogne Billancourt (FR)
(72) Inventeur: Ollivier, Gérard, 78340 Les Clayes sous Bois (FR)

(57) **Abrégé**

L'invention propose un vilebrequin (18) pour moteur à combustion interne qui tourne autour d'un axe de rotation (A4) et qui comporte au moins un flasque radial (28) qui porte à ses extrémités opposées un maneton (26) et un contrepoids excentré (30), du type dont le contrepoids (30) est délimité angulairement par deux arrêtes (32, 34) et radialement par un contour périphérique (36) courbe convexe, et du type dont la face inférieure (38) d'un piston (14) et le contour périphérique (36) du contrepoids (30) sont séparés par une distance prédéterminée (J1) lorsque le piston (14) est au point mort bas, caractérisé en ce que la distance qui sépare la face inférieure (38) du piston (14) et le contour périphérique (40) reste sensiblement constante lors du passage du contrepoids (30) en vis à vis de la face inférieure (38) du piston (14) de façon à augmenter l'inertie du contrepoids (30).

## Description

L'invention concerne un vilebrequin pour moteur à combustion interne

L'invention concerne plus particulièrement un vilebrequin pour moteur à combustion interne qui tourne autour d'un axe de rotation et qui comporte au moins un flasque radial qui porte à ses extrémités opposées un maneton et un contrepoids excentré du type dont le contrepoids est délimité angulairement par deux arrêtes et radialement par un contour périphérique courbe convexe, et du type dont la face inférieure du piston et le contour périphérique du contrepoids sont séparés par une distance prédéterminée lorsque le piston est au point mort bas.

Dans la plupart des moteurs à combustion, les mouvements de translation des pistons dus à l'énergie mécanique qui résulte de l'explosion du mélange carburé dans les chambres de combustion sont transmis à un vilebrequin par l'intermédiaire de bielles.

Une extrémité de chaque bielle, appelée pied de bielle, est reliée au piston correspondant et l'autre extrémité, appelée tête de bielle, est montée à rotation sur un élément cylindrique du vilebrequin appelé maneton.

Les manetons sont reliés entre eux par des flasques sensiblement transversaux et leurs axes de révolution sont excentrés par rapport à l'axe de rotation du vilebrequin. Ainsi, lorsque les axes du pied de bielle, du maneton et de rotation du vilebrequin ne sont pas alignés, les efforts de chaque bielle sur le maneton correspondant provoquent un couple qui met en mouvement le vilebrequin.

Dans le but de diminuer les à-coups provoqués par les explosions successives dans les chambres de combustion et ainsi que l'inertie des différents organes en mouvement, des contrepoids sont disposés sur le vilebrequin en vis-à-vis de chaque maneton par rapport à l'axe de rotation du vilebrequin. Ces contrepoids permettent ainsi d'augmenter l'inertie du vilebrequin et de l'équilibrer dynamiquement.

Il existe des contrepoids qui sont situés sur les flasques transversaux à l'opposé du maneton correspondant par rapport à l'axe de rotation du vilebrequin. Ils sont délimités angulairement par deux arrêtes et radialement par un contour courbe convexe qui est généralement circulaire et centré sur l'axe de rotation du vilebrequin. Le rayon du contour courbe est limité par la nécessité de l'existence d'un jeu de fonctionnement entre le contrepoids et la face inférieure du piston lorsque ce dernier est au point mort bas.

Des solutions ont été proposées pour augmenter l'inertie du contrepoids tout en respectant le jeu de fonctionnement.

L'une d'entre elles consiste à augmenter "l'angle" du contrepoids c'est-à-dire l'angle qui existe entre les deux arrêtes.

Une autre solution propose d'augmenter le nombre des contrepoids.

Cependant, ces solutions augmentent le rapport entre la masse des contrepoids et leur inertie par rapport à l'axe de rotation du vilebrequin. C'est-à-dire que les avantages apportés par l'augmentation de l'inertie des contrepoids induisent des inconvénients dus à l'augmentation de leur masse. De plus, de telles solutions représentent un surcoût important lors de la fabrication des vilebrequins.

La présente invention propose d'optimiser la forme des contrepoids pour obtenir une inertie maximum et une augmentation de poids minimum.

Dans ce but de l'invention propose un vilebrequin du type décrit précédemment caractérisé en ce que la distance qui sépare la face inférieure du piston et le contour périphérique reste sensiblement constante lors du passage du contrepoids en vis à vis de la face inférieure du piston de façon à augmenter l'inertie du contrepoids.

Selon d'autres caractéristiques de l'invention :
- le contour périphérique est sensiblement cylindrique ;
- le contour périphérique passe par trois points qui sont situés sur l'axe vertical de déplacement du piston dans trois positions angulaires différentes du vilebrequin et qui sont situés à la distance prédéterminée de la face inférieure du piston, l'un central, lorsque le piston est au point mort bas, les deux autres de part et d'autre du point central ;
- les deux points situés de part et d'autre du point central sont situés à la distance prédéterminée de la face inférieure du piston, lorsque l'axe d'articulation de la bielle sur le piston, l'axe du maneton et l'axe de rotation du vilebrequin sont alignés ;
- le contour périphérique est centré sur l'axe du maneton lorsque le piston est au point mort bas.

D'autres caractéristiques et avantages de l'invention apparaîtront à la lecture de la description détaillée qui suit pour la compréhension de laquelle on se reportera aux dessins annexés parmi lesquels :
- la figure 1 représente schématiquement, en coupe transversale, un dispositif constitué d'un vilebrequin selon l'état de la technique auquel sont reliés une bielle et un piston, ce dernier étant au point mort haut ;
- la figure 2 représente un dispositif similaire à celui représenté à la figure 1, le piston étant au point mort bas ;
- la figure 3 représente un dispositif similaire à celui représenté aux figures précédentes dans une position intermédiaire qui permet de déterminer la forme du contour du vilebrequin selon l'invention ;
- la figure 4 représente un dispositif similaire à celui représenté à la figure 3 dans une position extrême basse du piston ;
- la figure 5 représente un dispositif similaire à celui représenté à la figure 2 comportant un vilebrequin réalisé selon l'invention.

Dans la description qui suit une orientation supérieure et inférieure sera utilisée, à titre non limitatif, conformément à l'orientation verticale de haut en bas selon les figures.

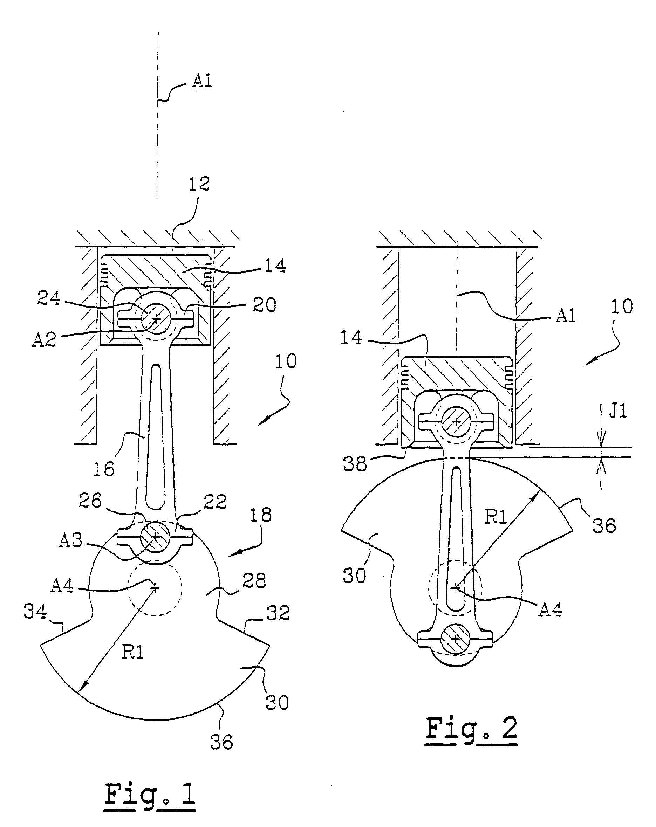

Les figures 1 et 2 représentent un dispositif 10 qui permet de transformer l'énergie produite par l'explosion du mélange carburé dans une chambre 12 d'un moteur à combustion en un couple de rotation.

Le dispositif 10 est notamment constitué d'un piston 14 d'une bielle 16 et d'un vilebrequin 18.

Le piston 14 est monté en translation dans la chambre de combustion 12 selon un axe vertical A1.

La bielle 16 se compose d'un pied 20 qui est monté à rotation autour d'un axe de piston 24 d'axe A2, et d'une tête 22 qui est montée à rotation autour d'un maneton 26 d'axe A3 excentré par rapport à un axe A4 de rotation du vilebrequin 18.

Les axes A2, A3 et A4 sont parallèles entre eux.

Le maneton 26 est fixé sur un flasque 28 du vilebrequin 18. Un contrepoids 30 solidaire du flasque 28 est excentré par rapport à l'axe A4 de rotation du vilebrequin 18.

Le contrepoids 30 est délimité angulairement par deux arrêtes 32 et 34 d'orientation sensiblement radiale, et radialement par un contour périphérique courbe convexe 36 qui, en section transversale et comme on peut le voir sur les figures, est circulaire de rayon R1 et est centré sur l'axe de rotation A4 du vilebrequin 18.

La figure 2 permet d'illustrer les impératifs à prendre en compte pour la détermination du rayon R1 du contour périphérique 36.

En effet, lorsque le piston 14 est au point mort bas, le contour périphérique 36 du contrepoids 30 est en vis-à-vis de la face inférieure 38 du piston 14. Pour que le contrepoids 30 ne rentre pas en collision avec la face inférieure 38 dans sa position extrême, il faut prévoir un jeu minimal de fonctionnement J1 qui peut être de l'ordre de quelques dixièmes de mm. Le rayon R1 du contour périphérique 36 correspond alors à la différence entre la distance (mesurée le long de l'axe A1) séparant l'axe de rotation A4 du vilebrequin 18 et la face inférieure 38 du piston 14 au point mort bas, et le jeu de fonctionnement J1.

Cependant, une telle forme du contour périphérique 36 ne permet pas d'obtenir une inertie maximum du contrepoids 30. En effet, lors de la rotation du vilebrequin 18, et lorsque le contour périphérique 36 est en vis-à-vis de la face inférieure 38 du piston 14, le jeu de fonctionnement J1 n'est optimum que lorsque le piston 14 est au point mort bas.

L'invention vise à déterminer le contour périphérique 36 pour que le jeu de fonctionnement J1 soit optimum au cours de la rotation du vilebrequin 18, lorsque le contour périphérique 36 est en vis-à-vis de la face inférieure 38 du piston 14. C'est à dire que le jeu J1 est minimum et sensiblement constant lorsque le contour périphérique 36 est en vis-à-vis de la face inférieure 38 du piston 14.

Pour ce faire, il est nécessaire de déterminer les valeurs du déplacement de la face inférieure 38 du piston 14, le long de l'axe vertical A1, par rapport à l'axe de rotation du vilebrequin 18 en fonction de l'angle de rotation du vilebrequin 18 autour de son axe de rotation A4.

La différence entre les valeurs du déplacement de la face inférieure 38 et le jeu de fonctionnement J1, constant et minimum, fournit la distance qui sépare l'axe de rotation A4 du contour périphérique 36 pour l'angle de rotation du vilebrequin 18 correspondant.

Ces calculs sont réalisés pour tous les angles de rotation du vilebrequin 18 qui correspondent au secteur compris entre les arrêtes 32 et 34.

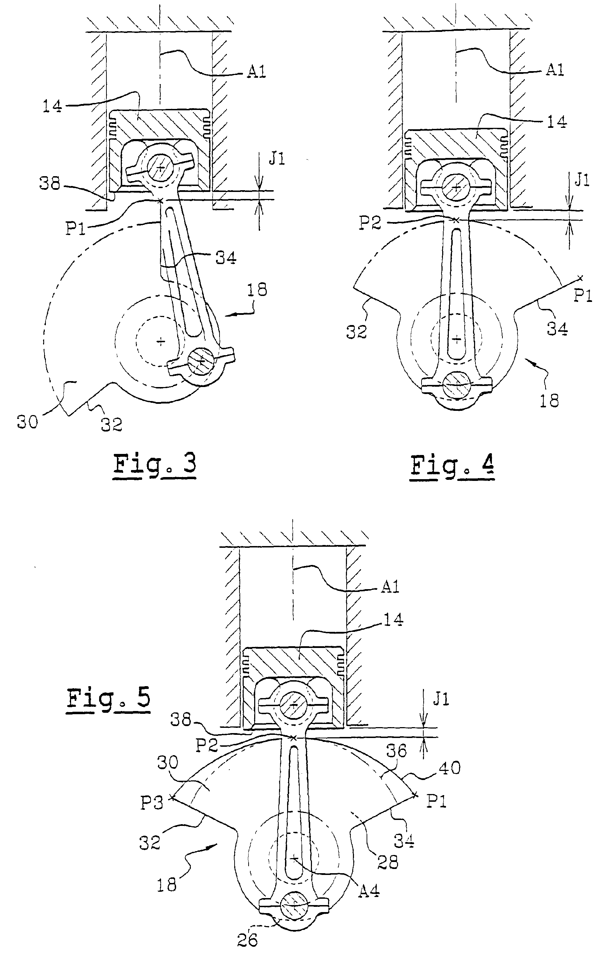

Les figures 3 et 4 illustrent un procédé de détermination approchée de la forme optimum du contour périphérique 36 qui est dans ce cas défini par un cercle passant par trois points P1, P2 et P3.

La figure 3 illustre la détermination du premier point P1 du contour périphérique 36. Pour ce faire le vilebrequin 18 est mis dans une première position qui correspond à l'alignement de l'arrête 34 avec l'axe A1 de translation du piston 14. Le point P1 qui appartient à l'arrête 34 est placé à la distance déterminée de la face inférieure 38 du piston 14 qui correspond au jeu de fonctionnement J1.

Le point central P2 est déterminé de façon similaire, conformément la figure 4, lorsque la bissectrice de l'angle défini par les arrêtes 32 et 34 est alignée avec l'axe A1.

Le point P3 est déterminé de façon similaire à celle du point P1, lorsque l'arrête 32 est alignée avec l'axe A1.

La forme du contour optimum approché 40 correspond alors au cercle qui passe par les trois points P1, P2, P3 définis précédemment.

La figure 5 représente d'une part le contour optimum approché 40 en trait fort et, d'autre part, le contour 36 selon l'état de la technique en trait mixte.

La zone située entre le contour optimum approché 40 et le contour 36 selon l'état de la technique représente l'augmentation de matière obtenue par l'invention.

L'augmentation de l'inertie du vilebrequin 18 est d'autant plus importante que la matière supplémentaire est ajoutée loin de son axe de rotation A4.

Un autre procédé de détermination approchée de la forme optimum du contour périphérique 36 consiste à déterminer le point central P2 de façon qu'il soit situé à la distance prédéterminée J1 de la face inférieure 38 du piston 14, lorsque l'axe d'articulation A2 de la bielle 16 sur le piston 14, l'axe du maneton A3 et l'axe de rotation A4 du vilebrequin 18 sont alignés. Le contour périphérique 40 est alors un cylindre dont la trace circulaire dans le plan vertical du contrepoids 30 passe par le point P2 et est centrée sur l'axe du maneton A3. Le contour périphérique 40 est limité angulairement par les arrêtes 32 et 34.

Ainsi le vilebrequin selon l'invention permet de diminuer la valeur du rapport entre la masse du contrepoids et l'inertie du vilebrequin, par rapport au vilebrequin selon l'état de la technique.

## Revendications

1. Vilebrequin (18) pour moteur à combustion interne qui tourne autour d'un axe de rotation (A4) et qui comporte au moins un flasque radial (28) qui porte à ses extrémités opposées un maneton (26) et un contrepoids excentré (30), du type dont le contrepoids (30) est délimité angulairement par deux arrêtes (32, 34) et radialement par un contour périphérique (36) courbe convexe, et du type dont la face inférieure (38) d'un piston (14) et le contour périphérique (36) du contrepoids (30) sont séparés par une distance prédéterminée (J1) lorsque le piston (14) est au point mort bas, caractérisé en ce que la distance qui sépare la face inférieure (38) du piston (14) et le contour périphérique (40) reste sensiblement constante lors du passage du contrepoids (30) en vis à vis de la face inférieure (38) du piston (14) de façon à augmenter l'inertie du contrepoids (30).

2. Vilebrequin (18) selon la revendication précédente, caractérisé en ce que le contour périphérique (40) est sensiblement cylindrique.

3. Vilebrequin (18) selon l'une des revendications 2 ou 3, caractérisé en ce que le contour périphérique (40) passe par trois points (P1, P2, P3) qui sont situés sur l'axe vertical de déplacement du piston (14) dans trois positions angulaires différentes du vilebrequin (18) et qui sont situés à la distance prédéterminée (J1) de la face inférieure (38) du piston (14), l'un (P2) central, lorsque le piston est au point mort bas, les deux autres (P1, P3) de part et d'autre du point central (P2).

4. Vilebrequin (18) selon la revendication précédente, caractérisé en ce que le point central (P2) est situé à la distance prédéterminée (J1) de la face inférieure (38) du piston (14), lorsque l'axe d'articulation (A2) de la bielle (16) sur le piston (14), l'axe du maneton (A3) et l'axe de rotation (A4) du vilebrequin (18) sont alignés, et en ce que le contour périphérique (40) est cylindrique et est centré sur l'axe du maneton (A3).

5. Vilebrequin (18) selon l'une quelconque des revendications précédentes, caractérisé en ce que le contour périphérique (40) est centré sur l'axe du maneton (A3) lorsque le piston (14) est au point mort bas.
